# EUROPÄISCHE PATENTSCHRIFT

(11) **EP 0 862 524 B1**
(45) Veröffentlichungstag und Bekanntmachung des Hinweises auf die Patenterteilung: **23.06.1999**
(21) Anmeldenummer: 96924766.7
(22) Anmeldetag: 24.07.1996
(51) Int. Cl.: B60R 16/02

(54) **ANORDNUNG ZUM KONTAKTLOSEN ÜBERTRAGEN VON SIGNALEN ZWISCHEN GEGENEINANDER LINEAR BEWEGBAREN FAHRZEUGTEILEN**
NON-CONTACTING DEVICE FOR THE TRANSMISSION OF SIGNALS BETWEEN VEHICLE PARTS WHICH MOVES LINEARLY WITH RESPECT TO EACH OTHER
DISPOSITIF POUR LA TRANSMISSION DE SIGNAUX SANS CONTACT ENTRE DES PARTIES DE VEHICULE SE DEPLA ANT LINEAIREMENT LES UNES PAR RAPPORT AUX AUTRES

(30) Priorität: 05.12.1995 DE 19545220
(43) Veröffentlichungstag der Anmeldung: 09.09.1998
(73) Patentinhaber: ROBERT BOSCH GMBH, 70442 Stuttgart (DE)
(72) Erfinder: DOBLER, Klaus, D-70839 Gerlingen (DE); ZABLER, Erich, D-76297 Stutensee (DE); DUKART, Anton, D-76744 Wörth (DE); HERRMANN, Thomas, D-74243 Langenbrettach (DE)
(86) Internationale Anmeldenummer: DE9601361
(87) Internationale Veröffentlichungsnummer: WO9720710

(56) Entgegenhaltungen:
- EP-A- 0 616 924
- WO-A-89/05049
- FR-A- 2 096 183

## Beschreibung

### Stand der Technik

Die vorliegende Erfindung betrifft eine Anordnung zum kontaktlosen Übertragen von Signalen zwischen einem feststehenden und einem demgegenüber linear bewegbaren Fahrzeugteil - vorzugsweise zwischen mindestens einer Schaltungseinheit, die an der Fahrzeugkarosserie installiert ist, und mindestens einer Schaltungseinheit, die sich in einem auf Schienen verschiebbar gelagerten Fahrzeugsitz befindet.

In Fahrzeugsitzen, sei es im Fahrer- oder im Beifahrersitz, sind oftmals verschiedene elektrische Einrichtungen, wie z.B. für die Sitzheizung oder Sitzverstellung installiert. Im Befahrersitz kommen noch elektronische Schaltungen für eine Sitzbelegungserkennung im Zusammenhang mit Airbagsystemen hinzu. Neuerdings werden Beifahrersitze auch mit Sidebags in der Seitenlehne des Sitzes ausgestattet. Für all diese Einrichtungen sind Steuer- oder Energiesignale von zentralen, an der Fahrzeugkarosserie fest installierten Schaltungseinheiten aus zu übertragen. Deshalb soll eine Anordnung angegeben werden, die verschleißfrei und mit großer Zuverlässigkeit Signale zwischen einem feststehenden und einem demgegenüber linear bewegbaren Fahrzeugteil (z.B. Fahrzeugsitz) überträgt.

### Vorteile der Erfindung

Die Aufgabe wird gemäß den Merkmalen des Anspruchs 1 dadurch gelöst, daß ein Übertrager vorgesehen wird, dessen Primär- und Sekundärwicklung in getrennten Schalenkernen liegen, von denen einer am feststehenden Fahrzeugteil und der andere am bewegbaren Fahrzeugteil fixiert ist. Dabei sind beide Schalenkerne als aneinander entlanggleitende Schienen ausgebildet, welche solche Profile besitzen, daß sie zusammen einen geschlossenen Kreis für den magnetischen Fluß zwischen der Primär- und der Sekundärwicklung bilden.

Gemäß den Unteransprüchen können die Schalenkern-Schienen entweder als H-Profile, L-Profile, T-Profile oder E-Profile ausgebildet sein. Diese Profilformen gewährleisten, daß Montagetoleranzen oder Toleranzen in der relativen Bewegung der den Übertrager bildenden Schalenkern-Schienen sich kaum störend auf die Signalübertragung auswirken. Es können übrigens auch mehrere solche schienenförmige Übertrager an einem Fahrzeugsitz installiert werden, wenn der Sitz eine Vielzahl von elektrischen Einrichtungen aufweist. Diese Übertrager können vorteilhafterweise in die Gleitschienen für den Sitz integriert werden.

### Beschreibung von Ausführungsbeispielen

Die Erfindung wird nun anhand mehrerer in der Zeichnung dargestellter Ausführungsbeispiele erläutert. Es zeigen:
Figur 1a einen Querschnitt durch einen Übertrager mit H-Profil-Schalenkernen, Figur 1b eine perspektivische Ansicht dieser Schalenkerne und Figur 1c einen Übertrager mit konisch geformten H-Profil-Schalenkernen,
Figur 2a einen Querschnitt durch einen Übertrager mit L-Profil-Schalenkernen und Figur 2b eine perspektivische Darstellung dieser Schalenkerne,
Figur 3a einen Querschnitt durch einen Übertrager mit einem T-Profil-Schalenkern und einem geteilten H-Schalenkern, Figur 3b eine perspektivische Ansicht dieser Schalenkerne und Figur 3c einen Querschnitt durch einen Übertrager mit einem T-Profil-Schalenkern und einem ungeteilten H-Profil-Schalenkern,
Figur 4a einen Querschnitt durch einen Übertrager mit E-Profil-Schalenkernen und Figur 4b eine perspektivische Ansicht dieser Schalenkerne.

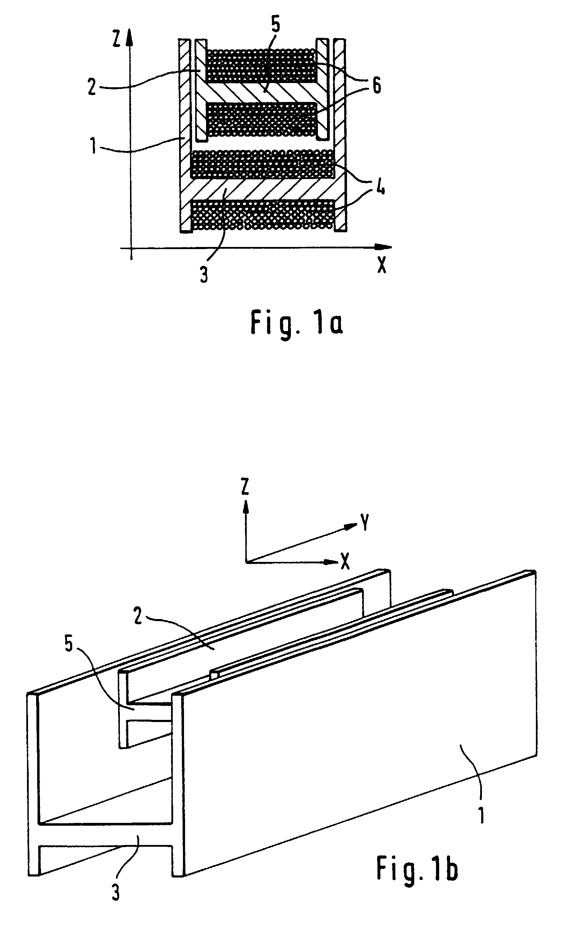

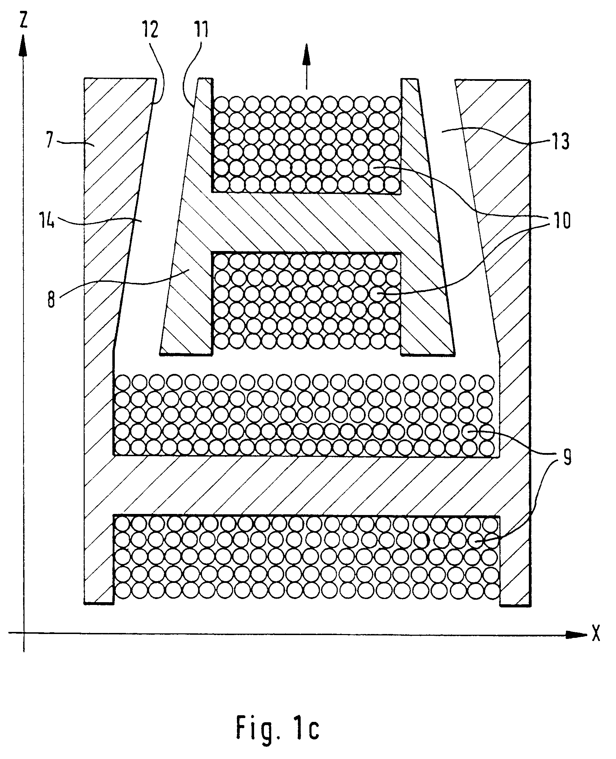

Der nachfolgend beschriebene Übertrager besitzt zwei als Schienen ausgebildete Schalenkerne, in denen die Primär- und die Sekundärwicklung untergebracht sind. Diese Schalenkern-Schienen, von denen die eine an einem feststehenden Fahrzeugteil (z.B. Karosserie) und die andere an einem linear bewegbaren Fahrzeugteil fixiert ist, gleiten berührungslos aneinander entlang, während der bewegbare Fahrzeugteil eine lineare Verschiebung erfährt. Der Abstand (das heißt der Luftspalt) zwischen beiden Schalenkern-Schienen ändert sich bei der Verschiebung nahezu nicht, so daß die induktive Kopplung zwischen der Primär- und der Sekundärwicklung konstant bleibt. Eine Verschiebung des bewegbaren Fahrzeugteils wirkt sich daher nicht störend auf übertragende Signale aus. Einige geeignete Profile für die Schalenkern-Schienen, welche einen geschlossenen Kreis für den magnetischen Fluß zwischen der Primär- und der Sekundärwicklung bilden, sind in den Figuren 1 bis 4 dargestellt.

Die Figur 1a zeigt einen Querschnitt durch einen Übertrager, dessen Schalenkern-Schienen 1 und 2 H-Profile besitzen. Wie die perspektivische Darstellung der beiden Schalenkerne 1 und 2 in der Figur 1b verdeutlicht, wird eine H-Profil-Schiene 2 innerhalb der anderen H-Profil-Schiene 1 geführt. Auf dem Querschenkel 3 der größeren H-Profil-Schiene 1 ist z.B. die Primärwicklung und auf dem Querschenkel 5 der kleineren H-Profil-Schiene 2 ist die Sekundärwicklung 6 aufgewickelt. Die kleinere H-Profil-Schiene 2 taucht so in die größere H-Profil-Schiene 1 ein, daß die Querschenkel 3 und 5 beider H-Profil-Schienen 1 und 2 parallel zueinander verlaufen. Bei dieser Anordnung der beiden H-Profil-Schienen 1 und 2 entsteht ein geschlossener Kreis für den magnetischen Fluß durch die beiden Wicklungen 4 und 6. Die H-Profil-Form bringt es mit sich, daß die Schalenkerne 1 und 2 große angrenzende Flächen an die Luftspalte zwischen beiden aufweisen. Dadurch wird der magnetische Widerstand des Übertragers sehr klein gehalten, was eine sehr gute induktive Kopplung zwischen der Primär- und der Sekundärwicklung zur Folge hat. Lagetoleranzen zwischen den beiden Schalenkernen in Richtung (X, Z) quer zur Verschieberichtung (Y) wirken sich daher sehr geringfügig auf die induktive Kopplung aus. Eine der beiden Schalenkern-Schienen - in den dargestellten Ausführungsbeispiel ist es die Schalenkern-Schiene 1 - ist in Verschieberichtung (Y) um einen solchen Betrag länger als die andere Schalenkern-Schiene, daß es auch bei einer maximalen Verschiebeposition noch zu einer vollständigen gegenseitigen Überdeckung der beiden Schalenkerne kommt.

Die Figur 1c zeigt ebenfalls zwei Schalenkern-Schienen 7 und 8 als Träger für die Primär-Wicklung 9 und die Sekundär-Wicklung 10. Bei dieser Ausführung besitzt die kleine H-Profil-Schiene 8 eine konisch geformte Außenkontur 11 und die große H-Profil-Schiene 7 besitzt eine konisch geformte Innenkontur 12. Durch diese konische Formung der beiden H-Profil-Schienen 7 und 8 entstehen zwei Luftspalten 13 und 14, die nicht mehr wie beim vorhergehend beschriebenen Ausführungsbeispiel parallel zueinander verlaufen, sondern aufeinander zugeneigt sind. Die Neigung der beiden Luftspalten 13 und 14 ist so gewählt, daß bei einer Außeinanderbewegung der beiden Schalenkerne 7 und 8 (In Pfeilrichtung) die Luftspalte 13 und 14 schmaler werden. Daduruch verringert sich der magnetische Widerstand in den Luftspalten, womit die Reduzierung der magnetischen Kopplung der beiden Wicklungen 9 und 10 durch das Auseinanderschieben der beiden Schalenkerne 7 und 8 kompensiert wird. Das Übertragungsverhalten würde also selbst bei einem Versatz der beiden Schalenkerne 7 und 8 in Z-Richtung nicht gestört.

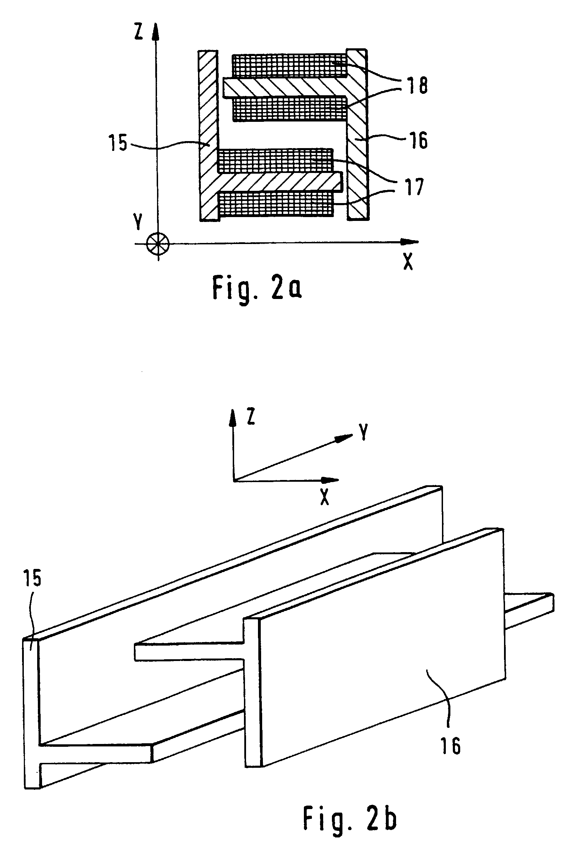

Die Figur 2a zeigt einen Querschnitt und die Figur 2b eine perspektivische Darstellung zweier Schalenkern-Schienen 15 und 16, welche ein L-Profil haben. Diese beiden L-Profil-Schienen 15 und 16 sind so zueinander angeordnet, daß ein geschlossener Kreis für den magnetischen Fluß zwischen der Primär-Wicklung 17 und der Sekundärwicklung 18 entsteht. Die Primärwicklung 17 ist auf einem Schenkel der L-Profil-Schiene 15 und die Sekundärwicklung 18 ist auf einem Schenkel der L-Profil-Schiene 16 aufgewickelt.

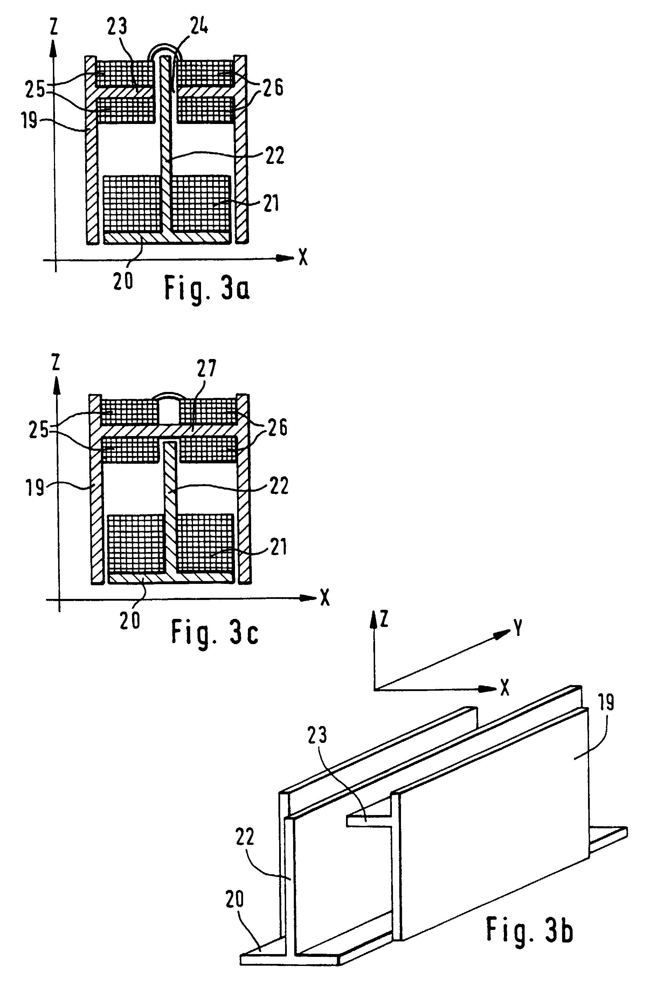

In Figur 3a ist ein Querschnitt eines Übertragers dargestellt, von dessen zwei Schalenkern-Schienen 19 und 20 eine Schalenkern-Schiene 19 ein H-Profil und die andere Schalenkern-Schiene 20 ein T-Profil besitzt. Die T-Profil-Schiene 20 taucht in die H-Profil-Schiene 19 mit ihrem die Primärwicklung 21 tragenden Längsschenkel 22 ein. Dabei durchdringt der Längsschenkel 22 der T-Profil-Schiene 20 einen in den Querschenkel 23 der H-Profil-Schiene 19 eingelassenen, in Verschiebe-Richtung Y verlaufenden Einschnitt 24. Diese Anordnung der beiden Schalenkern-Schienen 19 und 20 verdeutlicht die perspektivische Darstellung in Figur 3b. Die Sekundärwicklung des Übertragers ist auf den zum Längsschenkel 22 der T-Profil-Schiene 20 senkrecht liegenden Querschenkel 23 der H-Profil-Schiene 19 aufgewickelt. Wegen des Einschnittes 24 im Querschenkel 23 der H-Profil-Schiene 19 ist die Sekundärwicklung in zwei elektrisch miteinander verbundene Teilwicklungen 25 und 26 aufgeteilt; die eine Teilwicklung 25 ist links des Einschnitts 24 auf den Querschenkel 23 aufgewickelt, und die andere Teilwicklung 26 ist rechts vom Einschnitt 24 auf den Querschenkel 23 aufgewickelt. Bei der in den Figuren 3a und 3b dargestellten Anordnung der Schalenkern-Schienen 19 und 20 bildet der Längsschenkel 22 der T-Profil-Schiene 20 mit dem Querschenkel 23 der H-Profil-Schiene 19 zwei Luftspalte. Wie Figur 3c zeigt, besteht nur ein Luftspalt zwischen dem Längsschenkel 22 der T-Profil-Schiene 20 und dem Querschenkel 27 der H-Profil-Schiene 19, wenn der Längsschenkel 22 vor dem durchgehenden (ohne Einschnitt versehenen) Querschenkel 27 endet. Auch hier ist die Sekundärwicklung auf den Querschenkel 27 in die zwei Teilwicklungen 25 und 26 aufgeteilt.

Bei beiden in der Figur 3 dargestellten Ausführungen des Übertragers entstehen zwei symmetrische Kreisläufe für den magnetischen Fluß zwischen der Primär- und der Sekundärwicklung. Diese Ausführungen haben den Vorteil, daß ihr Übertragungsverhalten sehr unempfindlich ist gegenüber Lagetoleranzen in X- und Z-Richtung.

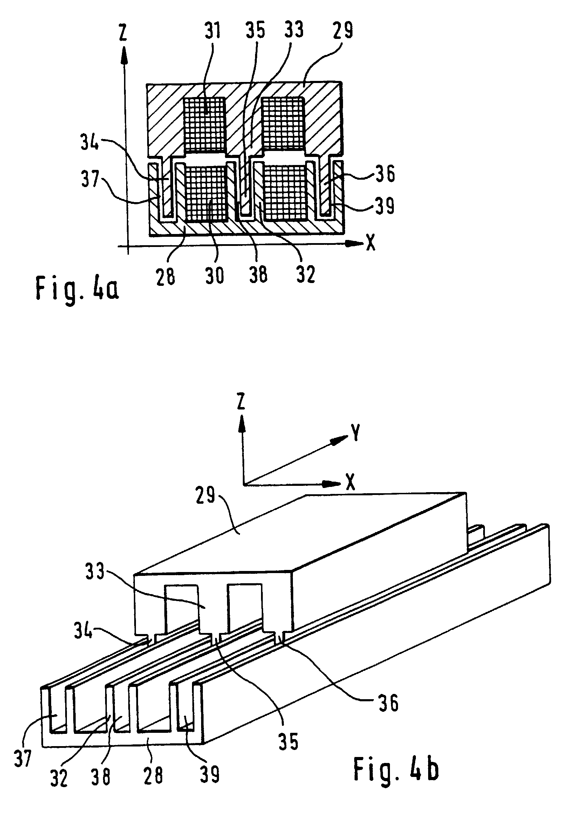

Die Figur 4a zeigt einen Querschnitt durch einen Übertrager, dessen beide Schalenkern-Schienen 28 und 29 ein E-Profil besitzen. Die beiden E-Profil-Schienen 28 und 29 sind, wie auch die perspektivische Darstellung in Figur 4b verdeutlicht, mit den Stirnseiten ihrer Querschenkel einander zugewandt. Die Primärwicklung 30 und die Sekundärwicklung 31 sind jeweils auf die mittleren Querschenkel 32 und 33 der E-Profil-Schienen 28 und 29 aufgewickelt. Bei dieser Geometrie der Schalenkerne sind die Primär- und die Sekundärwicklung vollkommen eingeschlossen, wodurch Streuflüsse sehr stark reduziert werden. Dies trägt zu einer Verbesserung der induktiven Kopplung der beiden Wicklungen bei. Eine weitere Verbesserung der induktiven Kopplung wird dadurch erreicht, daß an den Stirnseiten der Querschenkel einer E-Profil-Schiene 29 Stege 34, 35 und 36 angeformt sind, die in Verschieberichtung der beiden Schienen verlaufen, und in die Querschenkel der anderen E-Profil-Schiene 28 Nuten 37, 38 und 39 eingelassen sind, in welche die Stege 34, 35 und 36 der gegenüberliegenden E-Profil-Schiene 29 eingreifen.

Sind die Schalenkerne des Übertragers aus Massiveisen (µr = 300) hergestellt, so kommt es bekanntlich zur Bildung von Wirbelströmen. Diese Wirbelströme in den Schalenkernen fließen den Erregerströmen in der Primär- und der Sekundär-Wicklung entgegen und beeinträchtigen somit die Kopplung zwischen den beiden Wicklungen. Der Entstehung von Wirbelströmen kann dadurch entgegengewirkt werden, daß die Schalenkerne z.B. mit mehreren in Y-Richtung aufeinanderfolgenden und in der X-, Z-Ebenen liegenden Einschnitten versehen sind. Besonders günstig ist es, wenn die Einschnitte alternierend von der rechten und von der linken Seite her in die Schalenkerne eingelassen sind. Dadurch vergrößert sich der Weg für die Wirbelströme, das heißt der Widerstand für die Wirbelströme nimmt zu und bewirkt eine Verringerung der Wirbelstromstärke. Den gleichen Effekt kann man in bekannter Weise dadurch erzielen, daß die Schalenkerne durch Aufeinanderschichten von einzelnen gegeneinander isolierten Blechen hergestellt werden. Auch durch Wahl eines geeigneten Materials für die Schalenkerne kann der Wirbelstrom gering gehalten werden. Dieses Material muß eine wesentlich geringere elektrische Leitfähigkeit als Massiveisen besitzen, sollte aber ungefähr die gleiche Permeabilität µr haben wie Massiveisen. Ein Material, das diese Anforderungen weitgehend erfüllt, ist kunststoffgebundenes Reinsteisenpulver. Mit einer Leitfähigkeit von 2200 S/m liegt dieses Material weit unter der von Massiveisen mit einer Leitfähigkeit von 56 MS/m.

Da, wie vorangehend beschrieben, die Schalenkerne die Geometrie von Schienen aufweisen, können diese vorteilhafterweise in einer Gleitschiene eines Fahrzeugsitzes platzsparend integriert werden. Natürlich kann der schienenartige Übertrager auch seitlich einer Gleitschiene oder an einer sonstigen geeigneten Stelle unterhalb des Fahrzeugsitzes installiert werden. Falls mehrere elektrische Einrichtungen im Fahrzeugsitz mit elektricher Energie oder Steuersignalen versorgt werden müssen, die sich gegenseitig nicht beeinflussen dürfen, sind mehrere schienenartige Übertrager vorzusehen.

## Patentansprüche

1. Anordnung zum kontaktlosen Übertragen von Signalen zwischen einem feststehenden und einem demgegenüber linear bewegbaren Fahrzeugteil - vorzugsweise zwischen mindestens einer Schaltungseinheit, die an der Fahrzeugkarosserie installiert ist und mindestens einer Schaltungseinheit, die sich in einem auf Schienen verschiebbar gelagerten Fahrzeugsitz befindet - dadurch gekennzeichnet,
- daß die Anordnung aus mindestens einem Übertrager besteht, dessen Primär- (4, 9, 17, 21, 30) und Sekundärwicklung (6, 10, 18, 25, 26, 31) in getrennten Schalenkernen (1, 2, 7, 8, 15, 16, 19, 20, 28, 29) liegen, von denen einer am feststehenden Fahrzeugteil und der andere am bewegbaren Fahrzeugteil fixiert ist,
- und daß beide (1, 2, 7, 8, 15, 16, 19, 20, 28, 29) Schalenkerne als aneinander entlanggleitende Schienen ausgebildet sind, welche solche Profile besitzen, daß sie zusammen einen geschlossenen Kreis für den magnetischen Fluß zwischen der Primär- (4, 9, 17, 21, 30) und der Sekundärwicklung (6, 10, 18, 25, 26, 31) bilden.

2. Anordnung nach Anspruch 1, dadurch gekennzeichnet, daß beide Schalenkern-Schienen (1, 2) des Übertragers ein H-Profil besitzen, daß eine H-Profil-Schiene (2) in die andere H-Profil-Schiene (1) eintaucht und daß die Primär- (4) und die Sekundärwicklung (6) auf die Querschenkel (3, 5) der H-Profil-Schienen (1, 2) gewickelt sind.

3. Anordnung nach Anspruch 2, dadurch gekennzeichnet, daß die Außenkontur (11) der eintauchenden H-Profil-Schiene (8) und die Innenkontur (12) der anderen H-Profil-Schiene (7) konisch geformt sind, so daß dadurch zwischen den beiden H-Profil-Schienen (7, 8) zwei Luftspalte (13, 14) entstehen, welche aufeinander zugeneigt sind.

4. Anordnung nach Anspruch 1, dadurch gekennzeichnet, daß beide Schalenkern-Schienen (15, 16) des Übertragers ein L-Profil besitzen, und daß die beiden L-Profil-Schienen (15, 16) mit ihren Schenkeln so zueinander ausgerichtet sind, daß ein geschlossener Kreis für den magnetischen Fluß entsteht.

5. Anordnung nach Anspruch 1, dadurch gekennzeichnet, daß eine Schalenkern-Schiene (19) ein H-Profil und die andere Schalenkern-Schiene (20) ein T-Profil besitzt, daß die T-Profil-Schiene (20) in die H-Profil-Schiene (19) eintaucht, wobei der eine erste Wicklung (21) tragende Längsschenkel (22) der T-Profil-Schiene (20) senkrecht zu dem eine zweite Wicklung (25, 26) tragenden Querschenkel (23, 27) der H-Profil-Schiene (19) ausgerichtet ist.

6. Anordnung nach Anspruch 5, dadurch gekennzeichnet, daß die Wicklung auf dem Querschenkel (23, 27) der H-Profil-Schiene (19) in zwei elektrisch miteinander verbundene Teilwicklungen (25, 26) aufgeteilt ist, zwischen denen der Längsschenkel (22) der T-Profil-Schiene (20) mit dem Querschenkel (23, 27) der H-Profil-Schiene (19) einen oder zwei Luftspalte bildet.

7. Anordnung nach Anspruch 1, dadurch gekennzeichnet, daß beide Schalenkern-Schienen (28, 29) des Übertragers ein E-Profil besitzen, wobei die Primär- (30) und die Sekundärwicklung (31) auf die mittleren Querschenkel (32, 33) der E-Profil-Schienen (28, 29) gewickelt sind und die E-Profil-Schienen (28, 29) mit den Stirnseiten ihrer Querschenkel einander zugewandt sind.

8. Anordnung nach Anspruch 7, dadurch gekennzeichnet, daß die Querschenkel einer E-Profil-Schiene (28) mit stirnseitig eingelassenen Nuten (37, 38, 39) versehen sind und daß an den Stirnseiten der Querschenkel der anderen E-Profil-Schiene (29) Stege (34, 35, 36) vorhanden sind, welche in die Nuten (37, 38, 39) der gegenüberliegenden E-Profil-Schiene (28) eingreifen.

9. Anordnung nach einem der vorhergehenden Ansprüche, dadurch gekennzeichnet, daß der Übertrager in einer Gleitschiene für einen Fahrzeugsitz installierbar ist.

## Claims

1. Arrangement for the contactless transmission of signals between a stationary vehicle part and a vehicle part which can be moved linearly with respect thereto - preferably between at least one circuit unit installed on the vehicle body and at least one circuit unit situated in a vehicle seat which is mounted displaceably on rails - characterized
- in that the arrangement comprises at least one transformer whose primary (4, 9, 17, 21, 30) and secondary winding (6, 10, 18, 25, 26, 31) lie in separate pot-type cores (1, 2, 7, 8, 15, 16, 19, 20, 28, 29), of which one is fixed to the stationary vehicle part and the other is fixed to the moveable vehicle part
- and in that both (1, 2, 7, 8, 15, 16, 19, 20, 28, 29) pot-cores are designed as rails which slide along one another and have sections such that together they form a closed circuit for the magnetic flux between the primary (4, 9, 17, 21, 30) and the secondary winding (6, 10, 18, 25, 26, 31).

2. Arrangement according to Claim 1, characterized in that both pot-type core rails (1, 2) of the transformer have an H-section, in that one H-section rail (2) descends into the other H-section rail (1), and in that the primary (4) and the secondary winding (6) are wound onto the transverse limbs (3, 5) of the H-section rails (1, 2).

3. Arrangement according to Claim 2, characterized in that the outer contour (11) of the descending H-section rail (8) and the inner contour (12) of the other H-section rail (7) are shaped conically, so that two air gaps (13, 14) are thereby formed between the two H-section rails (7, 8), which air gaps are inclined towards one another.

4. Arrangement according to Claim 1, characterized in that both pot-type core rails (15, 16) of the transformer have an L-section, and in that the two L-section rails (15, 16) are oriented by their limbs with respect to one another in such a way as to form a closed circuit for the magnetic flux.

5. Arrangement according to Claim 1, characterized in that one pot-type core rail (19) has an H-section and the other pot-type core rail (20) has a T-section, in that the T-section rail (20) descends into the H-section rail (19), the longitudinal limb (22) of the T-section rail (20), which longitudinal limb carries a first winding (21), being oriented perpendicularly with respect to the transverse limb (23, 27) of the H-section rail (19), which transverse limb carries a second winding (25, 26).

6. Arrangement according to Claim 5, characterized in that the winding on the transverse limb (23, 27) of the H-section rail (19) is divided into two partial windings (25, 26), which are electrically connected to one another and between which the longitudinal limb (22) of the T-section rail (20) forms one or two air gaps with the transverse limb (23, 27) of the H-section rail (19).

7. Arrangement according to Claim 1, characterized in that both pot-type core rails (28, 29) of the transformer have an E-section, the primary (30) and the secondary winding (31) being wound onto the middle transverse limbs (32, 33) of the E-section rails (28, 29) and the ends of the transverse limbs of the E-section rails (28, 29) facing one another.

8. Arrangement according to Claim 7, characterized in that the transverse limbs of one E-section rail (28) are provided with grooves (37, 38, 39) made in the ends, and in that webs (34, 35, 36) are present on the ends of the transverse limbs of the other E-section rail (29), which webs engage in the grooves (37, 38, 39) of the opposite E-section rail (28).

9. Arrangement according to one of the preceding claims, characterized in that the transformer can be installed in a sliding rail for a vehicle seat.

## Revendications

1. Dispositif pour la transmission de signaux sans contact entre une partie fixe d'un véhicule et une partie mobile pouvant se déplacer en ligne droite par rapport à la première - de préférence entre au moins une unité de circuit qui est installée sur la carrosserie du véhicule, et au moins une unité de circuit qui se trouve dans un siège du véhicule qui peut coulisser sur des rails,
caractérisé en ce que
• le système se compose d'au moins un transmetteur, dont l'enroulement primaire (4, 9, 17, 21, 30) et l'enroulement secondaire (6, 10, 18, 25, 26, 31) se trouvent dans des âmes de coquilles séparées (1, 2, 7, 8, 15, 16, 19, 20, 28, 29), dont l'une est fixée sur la partie fixe du véhicule et l'autre est fixée sur la partie mobile du véhicule,
• deux âmes de coquilles (1, 2, 7, 8, 15, 16, 19, 20, 28, 29) sont constituées sous la forme de rails qui glissent l'une le long de l'autre et qui possèdent des profils tels qu'ils forment ensemble un circuit fermé pour le flux magnétique entre l'enroulement primaire (4, 9, 17, 21, 30) et l'enroulement secondaire (6, 10, 18, 25, 26, 31).

2. Dispositif selon la revendication 1,
caractérisé en ce que
• les deux rails (1, 2), constitués par des âmes de coquilles, du transmetteur possèdent un profil en forme d'H,
• un rail (2) au profil en forme d'H plonge dans le rail (1) au profil en forme d'H et
• l'enroulement primaire (4) et l'enroulement secondaire (6) sont enroulés sur les branches transversales (3, 5) des rails (1, 2) au profil en forme d'H.

3. Dispositif selon la revendication 2,
caractérisé en ce que
le contour extérieur (11) du rail (8) au profit en forme d'H qui plonge, et le contour extérieur (12) de l'autre rail (7) au profit en forme d'H ont une forme conique, de telle sorte que de cette façon il se forme entre les deux rails (7, 8) au profit en forme d'H deux entrefers (13, 14) qui sont inclinés l'un vers l'autre.

4. Dispositif selon la revendication 1,
caractérisé en ce que
• les deux rails (15, 16), constitués par les âmes de coquilles, du transmetteur possèdent un profit en L et
• les deux rails (15, 16) au profit en forme de L sont orientés l'un vers l'autre par leurs branches de telle façon qu'il se forme un circuit fermé pour le flux magnétique.

5. Dispositif selon la revendication 1,
caractérisé en ce que
• un rail constitué par une âme de coquille, le rail (19) possède un profit en forme d'H et l'autre rail constitué par une âme de coquille, le rail (20) possède un profil en forme de T,
• le rail (20) à profil en forme de T plonge dans le rail (19) à profit en forme de H,
• l'une des branches transversales (22) qui porte un premier enroulement (21), du rail (20) au profit en forme de T étant orienté perpendiculairement à la branche transversale (23, 27) qui porte un second enroulement (25, 26), du rail (19) au profil en forme de H.

6. Dispositif selon la revendication 5,
caractérisé en ce que
l'enroulement sur la branche transversale (23, 27) du rail (19) au profil en forme de H est divisé en deux enroulements partiels (25, 26), reliés électriquement l'un à l'autre, entre lesquels la branches longitudinale (22) du rail (20) au profil en forme de T forme avec la branche transversale (23, 27) du rail (29) au profil en forme de H un ou deux entrefers.

7. Dispositif selon la revendication 1,
caractérisé en ce que
les deux rails (28, 29), constitués par des âmes de coquilles, du transmetteur possèdent un profil en forme d'E, l'enroulement primaire (30) et l'enroulement secondaire (31) étant enroulés sur la branche transversale centrale (32, 33) des rails (28, 29) au profil en forme d'E et les rails (28, 29) au profil en forme d'E étant tournés par les faces frontales de leurs branches transversales l'un vers l'autre.

8. Dispositif selon la revendication 7,
caractérisé en ce que
• les branches transversales d'un rail (28) au profil en forme d'E sont pourvues de rainures (37, 38, 39) pratiquées du côté frontal et
• sur les faces frontales des branches transversales de l'autre rail (29) au profil en forme d'E il est prévu des nervures (34, 35, 36) qui viennent en prise dans les rainures (37, 38, 39) du rail opposé (28) au profil en forme d'E.

9. Dispositif selon l'une des revendications précédentes,
caractérisé en ce que
le transmetteur peut être installé dans un rail de glissement pour le siège d'un véhicule.
